# FASCICULE DE BREVET EUROPEEN

(11) **EP 2 960 773 B1**
(45) Date de publication et mention de la délivrance du brevet: **09.11.2016**
(21) Numéro de dépôt: 15170217.2
(22) Date de dépôt: 02.06.2015
(51) Int. Cl.: G06F 3/0488

(54) **PROCÉDÉ ET DISPOSITIF DE COMMANDE D'AU MOINS UN ÉQUIPEMENT**
VERFAHREN UND VORRICHTUNG ZUR STEUERUNG MINDESTENS EINER APPARATUR
A METHOD AND A DEVICE FOR CONTROLLING AT LEAST ONE PIECE OF EQUIPMENT

(30) Priorité: 27.06.2014 FR 1401461
(43) Date de publication de la demande: 30.12.2015
(73) Titulaire: Airbus Helicopters, 13725 Marignane Cedex (FR)
(72) Inventeur: Fontaine, Lionel, 13960 SAUSSET LES PINS (FR)
(74) Mandataire: Pouillot, Laurent Pierre Paul

(56) Documents cités:
- EP-A1- 0 562 929
- EP-A1- 2 600 108
- US-A1- 2009 063 967

## Description

La présente invention concerne un procédé et un dispositif de commande d'au moins un équipement, et en particulier un dispositif de commande d'un aéronef. Plus particulièrement, le dispositif de commande comprend un écran tactile.

La présente invention se situe donc dans le domaine des interfaces homme-machine tactiles des aéronefs.

Certaines procédures de vol nécessitent des interactions entre un équipage et un ou plusieurs dispositifs de commande.

Ces dispositifs de commande peuvent comprendre des commandes qualifiées de « virtuelles » dans la mesure où les commandes sont représentées par des symboles visualisés sur un écran tactile. L'écran tactile matérialise alors une ou plusieurs commandes pouvant être manoeuvrées en touchant cet écran tactile.

Un tel dispositif de commande peut regrouper plusieurs instruments usuels. L'écran tactile affiche alors des commandes différentes en fonction de l'équipement à contrôler. Le dispositif de commande est ainsi un dispositif multifonction.

Les dispositifs de commande à écran tactile sont notamment intéressants compte tenu de leur ergonomie.

Toutefois, les mouvements d'un équipage dans l'aéronef peuvent alors induire des interactions intempestives avec ces dispositifs de commande à écran tactile. Lors d'un vol, un pilote peut par exemple exercer une pression sur un écran tactile sans le vouloir, et induire le fonctionnement indu d'un équipement ou d'un système.

Pour éviter une telle situation, l'état de la technique prévoit diverses solutions.

Pour éviter une interaction non volontaire avec l'écran tactile, le système peut comprendre un dispositif de verrouillage/ déverrouillage de cet écran tactile.

Bien qu'efficace, le déverrouillage d'un écran tactile avant chaque interaction peut être un élément perturbant pour un pilote occupé par d'autres tâches. En effet, cette méthode tend à augmenter la charge de travail du pilote. Dès lors, le pilote risque de commettre des erreurs par exemple en tentant d'interagir avec un écran tactile verrouillé.

D'autres dispositifs tendent à requérir le déverrouillage individuel de chaque commande matérialisée sur un écran tactile.

Cette méthode peut aussi augmenter significativement la charge de travail d'un pilote.

Dans ce contexte, le document EP 1 964 022 prévoit un procédé pour déverrouiller un écran tactile en déplaçant une image de déverrouillage le long d'un trajet.

Le document US 2014/0062893 décrit un système et un dispositif pour réduire la probabilité d'une activation accidentelle d'un écran tactile.

Ce document US 2014/0062893 décrit un premier mode de fonctionnement par comparaison d'un profil à un profil préenregistré, un deuxième mode de fonctionnement interactif à retour visuel et un troisième mode de fonctionnement où le niveau de performance est associé au type de fonction assignée à l'interface homme machine à commander.

Le document EP1360572 B1 est éloigné des écrans tactiles en faisant référence à un ordinateur. Ce document porte sur une icône programmable à trois états qui est présentée sur un afficheur d'ordinateur. Le premier état correspond à un état passif. Le deuxième état est actionné pour démarrer une action sur l'ordinateur lors de sa sélection de façon à empêcher une initiation par inadvertance de l'action sur ordinateur, par sélection successive des premier et deuxième états.

L'action démarre alors sur sélection de l'utilisateur en révélant un troisième état.

Le document EP 2587350 décrit une méthode pour déterminer si un ordre donné en touchant un écran tactile est valide. Cette méthode détermine la validité d'une telle action en fonction d'une signature biomécanique.

Le document FR 2853095 vise un dispositif d'interface homme machine sécurisé pour écran tactile.

Ce document reprend le principe d'un bouton à verrouillage physique appliqué à un écran tactile.

Le document FR 2911409 décrit un procédé et un système assurant une commande sécurisée à partir d'un écran tactile.

Ce document suggère l'utilisation de trois symboles pour une commande.

Le document US 8633913 B1 propose un système de commande et d'affichage adapté à un écran tactile comprenant plusieurs formats de données.

Les documents EP 0562929, US 2009/063967 et EP 2600108 sont aussi connus.

La présente invention a alors pour objet de fournir un dispositif de commande appliquant une méthode alternative, afin qu'un dispositif de commande muni d'un écran tactile ne prenne en compte que des actions réellement requises par un individu.

L'invention concerne notamment un procédé mis en oeuvre par un système comprenant un dispositif de commande en liaison avec au moins un équipement à contrôler, ce dispositif de commande comprenant un écran tactile, cet écran tactile pouvant afficher au moins un boîtier de commande virtuel comprenant au moins une zone de commande tactile qui génère une commande transmise audit équipement lorsqu'un individu touche cette zone de commande.

Le dispositif de commande peut ainsi comprendre des boutons ou équivalents pour afficher une pluralité de boîtiers de commande virtuels. Le terme « virtuel » signifie que le boîtier de commande n'est pas muni d'un ou plusieurs boutons physiques, tels qu'un bouton poussoir ou un bouton rotatif. Les commandes sont en effet transmises aux équipements adéquats en touchant des zones prédéterminées de l'écran.

L'écran tactile peut être un écran usuel. Par exemple, l'écran tactile comprend une « dalle » tactile.

Chaque boîtier de commande virtuel peut être associé à une fonction ou à un dispositif. Par exemple, un boîtier de commande virtuel peut permettre de contrôler un système de climatisation.

Le procédé est notamment remarquable en ce que :
- l'écran tactile est en permanence déverrouillé pour qu'un opérateur puisse générer une commande en touchant une zone de commande,
- on place l'écran tactile dans un état passif en conférant à cet écran tactile un premier mode d'affichage lorsqu'aucune zone de commande n'a été touchée par un individu,
- on place l'écran tactile dans un état actif en conférant à cet écran tactile un deuxième mode d'affichage distinct du premier mode d'affichage lorsqu'au moins une zone de commande a été touchée par un individu,
- on équipe le dispositif de commande d'un moyen de validation et on valide conjointement chaque commande requise suite au passage de l'écran tactile de l'état passif à l'état actif lorsque ledit moyen de validation est manipulé, ledit dispositif de commande transmettant au moins un signal à au moins un équipement pour retranscrire chaque commande,
- on place l'écran tactile dans ledit état passif suite à la manipulation dudit moyen de validation.

Ce procédé s'applique à tout dispositif de commande muni d'un boîtier de commande virtuel, et notamment à tout dispositif de commande d'un aéronef.

Un des inconvénients de certains systèmes de l'art antérieur est de mettre en oeuvre un bouton de verrouillage/déverrouillage d'un écran tactile.

Ce procédé va à l'encontre du préjugé consistant à indiquer qu'un écran tactile doit être verrouillé pour empêcher une activation accidentelle d'une commande.

En effet, le procédé propose de déverrouiller en permanence l'écran tactile, ce qui revient à dire que les zones de commande peuvent en permanence être utilisées.

En outre, certains systèmes proposent de désactiver des zones de commande.

A l'inverse de la logique du document EP1360572, le procédé selon l'invention propose un unique moyen de validation qui permet de valider de manière centralisée l'ensemble des commandes passées. Le procédé mémorise les commandes avant validation, et permet ainsi d'ajuster ou de corriger ces commandes si nécessaire.

Dès lors, l'écran tactile peut présenter un premier mode d'affichage dans un état passif, mis en oeuvre tant que l'écran tactile n'a pas été touché par un individu. Cet état est dit « passif » dans la mesure où aucun ordre de commande n'a été formulé.

A l'inverse, l'écran tactile présente un deuxième mode d'affichage dans un état actif, mis en oeuvre quand l'écran tactile a été touché par un individu. Cet état est dit « actif » dans la mesure où au moins un ordre de commande a été formulé en touchant l'écran tactile.

On entend par « mode d'affichage » l'aspect visuel conféré à au moins une portion de l'écran tactile.

Par suite, un individu peut déterminer si l'écran tactile est dans l'état passif ou actif simplement en regardant cet écran tactile. L'écran tactile représente le boîtier de commande virtuel en dans l'état passif par défaut, ce qui signifie qu'aucune commande n'a été effectuée.

Par exemple, le contraste entre une page affichée selon le premier mode d'affichage et une page affichée selon le deuxième mode d'affichage est important.

Selon ce procédé, l'écran tactile est initialement dans l'état passif.

Durant une étape d'actionnement, un individu effectue alors une série de commandes volontairement ou indûment en touchant l'écran tactile.

Lorsque l'écran tactile est touché par un individu, le système passe alors dans l'état actif durant une étape d'armement automatique.

Dès lors, l'écran tactile passe du premier mode d'affichage au deuxième mode d'affichage.

Ce passage du premier mode d'affichage au deuxième mode d'affichage est intéressant en indiquant rapidement aux membres d'équipage d'un aéronef, par exemple, que des commandes sont en attente de validation.

A ce stade, les commandes ne sont pas transmises à un équipement, mais sont éventuellement mémorisées. Les commandes sont donc en attente de validation.

Durant une étape de validation manuelle, un individu peut valider chaque commande passée en manoeuvrant volontairement le moyen de validation. Les commandes sont alors conjointement transmises aux équipements concernés. L'écran tactile représente ensuite le boitier de commande virtuel dans l'état passif.

Par suite, la génération des commandes vers au moins un équipement résulte d'une action volontaire. Ce procédé réduit les risques d'activation accidentelle d'un équipement.

Par conséquent, ce procédé permet de filtrer les interactions intempestives avec un écran tactile, notamment installé sur la console d'un cockpit d'aéronef.

Ce procédé permet en outre d'améliorer la réactivité d'exécution d'une procédure de vol impliquant un écran tactile par rapport à un système nécessitant un déverrouillage par exemple.

En outre, ce procédé peut tendre à augmenter le nombre de procédures exécutées avec succès grâce à la phase de validation. En effet, la phase de validation permet à un individu de contrôler les commandes qui vont être prises en compte par le système.

Ce procédé peut de plus comporter une ou plusieurs des caractéristiques additionnelles qui suivent.

Par exemple, chaque zone de commande peut être affichée dans l'état passif et dans l'état actif.

Le boîtier de commande présente alors les mêmes zones de commande dans l'état passif et l'état actif.

Par ailleurs, le premier mode d'affichage confère un premier aspect visuel à au moins une portion de l'écran tactile, et ledit deuxième mode d'affichage confère un deuxième aspect visuel à ladite portion distinct du premier aspect visuel.

En observant la portion de l'écran d'affichage faisant l'objet du premier mode d'affichage et du deuxième mode d'affichage, un individu détermine aisément l'état de l'écran tactile

Le signalement de l'état actif peut prendre diverses formes. Par exemple, certaines zones de l'écran tactile peuvent clignoter dans l'état actif.

Selon une variante, le premier mode d'affichage confère un premier aspect visuel à un fond de l'écran tactile, le deuxième mode d'affichage conférant un deuxième aspect visuel audit fond distinct du premier aspect visuel.

Le fond représente les portions de l'écran ne comportant pas de zone de commande par exemple.

Ainsi, le fond de l'écran tactile peut changer de couleur et/ou de texture entre l'état actif et l'état passif.

A titre illustratif, le fond de l'écran peut être noir dans le premier mode d'affichage et gris dans le deuxième mode d'affichage.

Par ailleurs, le moyen de validation peut comporter un bouton situé en dehors de l'écran tactile ou via des moyens de commande vocales. Eventuellement, le moyen de validation comprend un bouton disponible sur une planche de bord ou sur un manche du cockpit

Toutefois, on peut matérialiser le moyen de validation par une zone de validation de l'écran tactile. Cette zone de validation peut être délimitée par une ligne continue.

Par suite, la zone de validation peut aussi être modifiée par un changement d'aspect entre l'état actif et l'état passif.

Lorsque le premier mode d'affichage confère un premier aspect visuel à un fond de l'écran tactile, le deuxième mode d'affichage conférant un deuxième aspect visuel audit fond distinct du premier aspect visuel, la zone de validation peut présenter le même aspect visuel que le fond.

Par exemple, la zone de validation comporte la même couleur et/ou la même texture que le fond de l'écran, aussi bien dans l'état actif que dans l'état passif.

Par ailleurs, le premier mode d'affichage conférant un premier aspect visuel à un fond de l'écran tactile, et le deuxième mode d'affichage conférant un deuxième aspect visuel audit fond distinct du premier aspect visuel, chaque zone de commande présente éventuellement un troisième aspect visuel distinct du premier aspect visuel dudit fond.

Cette caractéristique vise à distinguer une zone de commande du fond.

Par ailleurs, on peut équiper le dispositif de commande d'un moyen d'annulation, et on annule chaque commande requise suite au passage de l'écran tactile de l'état passif à l'état actif lorsque le moyen d'annulation est sollicité durant une durée supérieure à un temps seuil dit « temps long », l'écran tactile retournant alors dans l'état passif.

Si un individu effectue des commandes erronées, sciemment ou de manière intempestive, toutes les commandes sont annulées par une manoeuvre longue du moyen d'annulation. Par exemple, le temps long est de l'ordre de trois secondes.

En complément ou de manière alternative, on peut équiper le dispositif de commande d'un moyen d'annulation et on annule la dernière commande requise suite au passage de l'écran tactile de l'état passif à l'état actif lorsque ledit moyen d'annulation est sollicité durant une durée inférieure à un temps seuil dit « temps court », et on maintient l'écran tactile dans l'état actif.

Si un individu effectue une commande erronée, cette commande peut être annulée en sollicitant le moyen d'annulation durant un temps court. Par exemple, le temps court est de l'ordre d'une seconde.

Dès lors, un même moyen d'annulation peut alors permettre d'annuler toutes les commandes ou la dernière commande passée.

Par exemple, si l'écran tactile a été sollicité indûment, un individu annule durant une étape de désarmement toutes les commandes en sollicitant le moyen d'annulation durant le temps long, ou annule la dernière en sollicitant le moyen d'annulation durant le temps court.

Une annulation complète entraîne le passage du boitier de commande virtuel dans l'état passif. Si des commandes ont été mémorisées, ces commandes sont supprimées et ne sont pas transmises aux équipements associés.

Le système est alors remis dans son état initial d'affichage.

Le moyen d'annulation peut prendre la forme de boutons disponibles sur une planche de bord ou des manches du cockpit, voire d'un moyen de commande vocales.

Toutefois, on peut matérialiser le moyen d'annulation par une zone d'annulation dudit écran tactile. Cette zone d'annulation peut être délimitée par une ligne continue.

Par suite, la zone d'annulation peut aussi être modifiée par un changement d'aspect entre l'état actif et l'état passif.

Lorsque le premier mode d'affichage confère un premier aspect visuel à un fond de l'écran tactile, le deuxième mode d'affichage conférant un deuxième aspect visuel audit fond distinct du premier aspect visuel, la zone d'annulation peut présenter le même aspect visuel que le fond.

Par exemple, la zone d'annulation comporte la même couleur et/ou la même texture que le fond de l'écran.

Par ailleurs, on peut entourer chaque zone de commande touchée par un individu avec une ligne continue dans l'état actif, et on supprime chaque ligne continue lors du passage de l'écran tactile de l'état actif à l'état passif.

La ligne continue représente un cadre épais par exemple, tel qu'un rectangle à bord arrondi présentant un aspect visuel particulier.

Un individu peut alors identifier visuellement les zones de commande activées.

Le moyen de signaler les zones de commande sollicitées peut varier. Par exemple, on peut augmenter la taille d'un symbole de la zone de commande, faire clignoter un symbole, ou agir sur la texture et/ou la couleur d'au moins une partie de la zone de commande.

Dans ce contexte, on supprime la ligne continue entourant la dernière zone de commande touchée par un individu en manoeuvrant un moyen d'annulation, notamment durant un temps court.

En complément d'un moyen d'annulation manuel ou de manière alternative, si aucune action n'est entreprise dans l'état actif à l'issue d'une période prédéterminée, on annule automatiquement chaque commande passée depuis le passage de l'état passif à l'état actif et on passe ledit écran tactile dans l'état passif.

L'étape de désarmement peut ainsi comprendre un mode automatique.

Si l'écran tactile n'est pas touché par un individu durant ladite période, le système retourne dans l'état passif sans transmettre d'ordre aux équipements associés.

Si les commandes passées sur le boitier de commande virtuel sont intempestives, ou si les commandes sont voulues mais qu'un individu n'est pas en mesure de les contrôler pour validation, alors les commandes vont être automatiquement annulées à l'issue d'une période d'inactivité prédéterminée.

Une telle période peut être de l'ordre de 5 secondes par exemple.

Toutefois, cette période peut varier en fonction de la mission, ladite mission étant choisie parmi une liste de mission par un individu.

Une telle période peut être réglée lors d'évaluations réalisées en vol par un équipage.

Par ailleurs, le système peut comporter un équipement de climatisation, ledit écran tactile comportant une pluralité de zones de commande incluant :
- une zone de commande dite « zone de température » pour régler une température à obtenir en mettant en oeuvre ledit équipement de climatisation,
- une zone de commande dite « zone de ventilation » pour régler une ventilation produite par ledit équipement de climatisation
- une zone de commande dite « zone de mode de fonctionnement » pour requérir soit un fonctionnement manuel ou soit fonctionnement automatique dudit équipement de climatisation.

Outre un procédé, l'invention vise un dispositif de commande pour commander au moins un équipement, ce dispositif de commande comprenant un écran tactile, cet écran tactile comprenant au moins une zone de commande tactile qui génère une commande transmise audit équipement lorsqu'un individu touche cette zone de commande. De plus :
- le dispositif de commande est dépourvu d'un moyen de verrouillage de l'écran tactile empêchant la manoeuvre d'au moins une zone de commande,
- ledit dispositif de commande comporte un moyen de validation et une unité de traitement exécutant des instructions mémorisées dans une unité de stockage pour mettre en oeuvre le procédé précédemment décrit.

L'invention et ses avantages apparaîtront avec plus de détails dans le cadre de la description qui suit avec des exemples donnés à titre illustratif en référence aux figures annexées qui représentent :
- la figure 1, une vue d'un aéronef muni d'un système selon l'invention,
- les figures 2 à 4, des vues d'un écran tactile explicitant le procédé selon l'invention,
- la figure 5, une vue explicitant une étape de désarmement automatique.

Les éléments présents dans plusieurs figures distinctes sont affectés d'une seule et même référence.

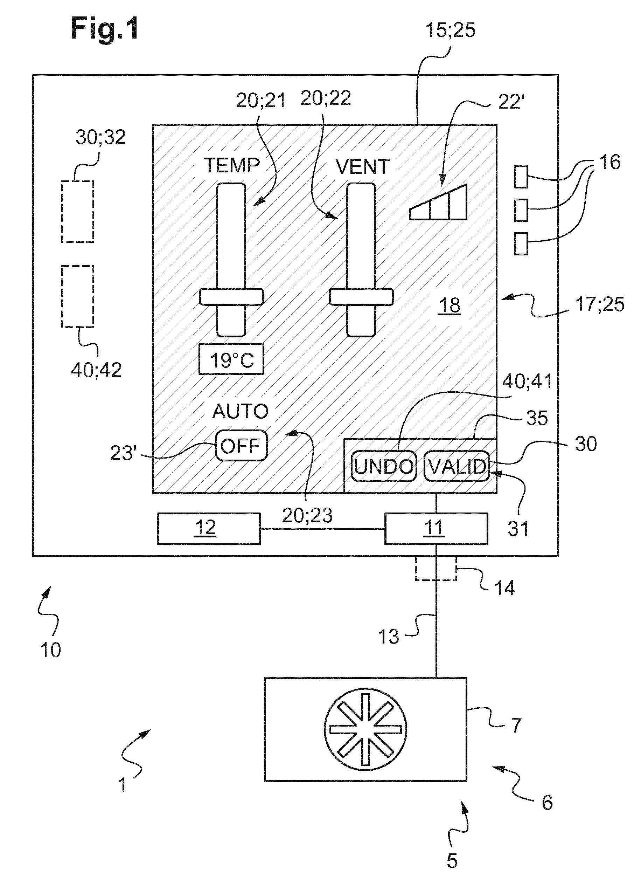

La figure 1 présente un aéronef 1 comprenant un système 5.

Ce système 5 inclut une interface homme-machine pour commander au moins un équipement 6. Un tel équipement 6 peut être un équipement de climatisation 7.

Cette interface homme machine inclut alors un dispositif de commande 10 relié à chaque équipement 6 par une liaison 13 filaire ou non filaire. En outre, un moyen de traitement et d'interface 14 usuel peut être interposé entre le dispositif de commande 10 et au moins un équipement 6.

Ce dispositif de commande 10 comporte alors un écran tactile 15 et un contrôleur. Ce contrôleur produit un signal pour afficher des informations sur l'écran tactile, et peut générer un signal de commande lorsqu'un individu touche l'écran tactile.

Un tel contrôleur peut comporter une unité de traitement 11 exécutant des instructions mémorisées dans une unité de stockage 12 pour afficher les informations requises sur l'écran et générer les signaux adéquats lorsque l'écran tactile est sollicité par un individu. Ainsi, le contrôleur détermine les zones touchées par l'individu pour générer le signal adéquat et le transmettre à l'équipement adéquat. L'unité de traitement peut comprendre par exemple un processeur, un circuit intégré, un système programmable, un circuit logique, ces exemples ne limitant pas la portée donnée à l'expression « unité de traitement ».

Ainsi, lorsqu'un individu touche l'écran tactile, un ordre peut être transmis à un équipement sous la forme d'un signal émis par le contrôleur.

Dans un but de concision, les techniques conventionnelles relatives à la génération d'images et de symboles sur un écran tactile et à la mise en oeuvre d'un écran tactile ne sont pas décrites dans le détail. De même, les connections entres les divers organes décrits représentent des liaisons fonctionnelles et/ou physiques entre ces divers organes. Il est à noter que de multiples alternatives sont décrites dans l'état de la technique. Ainsi, les liaisons sont filaires ou non filaires et peuvent impliquer la mise en oeuvre de systèmes de communication usuels.

Le dispositif de commande peut comprendre des boutons 16 ou équivalents pour choisir la fonction à réaliser. En effet, le dispositif de commande peut générer l'affichage d'une pluralité de boîtiers de commande virtuels 17 sur l'écran tactile, chaque boîtier de commande virtuel 17 pouvant être dédié à une application.

Au moins un boîtier de commande virtuel 17 comporte au moins une zone de commande 20 tactile pour générer une commande destinée à un équipement. Chaque zone de commande est par exemple toujours affichée, quel que soit l'état du boîtier de commande virtuel.

Par exemple, le boîtier de commande virtuel utilisé pour commander un équipement de climatisation 7 comporte une zone de commande 20 dite « zone de température 21 » pour régler une température à obtenir en mettant en oeuvre ledit équipement de climatisation 7. En touchant la zone de température, un individu peut déplacer un curseur pour déterminer la température à atteindre, cette température étant affichée numériquement par ailleurs.

De plus, le boîtier de commande virtuel comporte une zone de commande 20 dite « zone de ventilation 22 » pour régler une ventilation produite par ledit équipement de climatisation 7. En touchant la zone de ventilation 22, un individu peut déplacer un curseur pour déterminer la puissance d'un ventilateur, un symbole 22' illustrant cette puissance.

En outre, le boîtier de commande virtuel comporte une zone de commande 20 dite « zone de mode de fonctionnement 23 » pour requérir soit un fonctionnement manuel soit un fonctionnement automatique dudit équipement de climatisation 7. Par exemple, la zone de mode de fonctionnement 23 comporte un actionneur virtuel 23' mentionnant le mode de fonctionnement. En appuyant sur cet actionneur virtuel 23', un individu modifie le mode fonctionnement. Par exemple, le texte « ON » affiché sur l'actionneur signifie l'activation d'un mode de fonctionnement automatique, et le texte « OFF » affiché sur l'actionneur sur la figure 1 signifie la désactivation d'un mode de fonctionnement automatique.

Indépendamment de la nature de l'équipement contrôlé, le dispositif de commande 10 ne comporte aucun moyen de verrouillage de l'écran tactile. A tout moment, un individu peut agir sur une zone de commande.

Par contre, le dispositif de commande comporte un moyen de validation 30 manuel pour qu'un individu puisse valider au moins un ordre.

Le moyen de validation 30 peut comprendre un bouton de validation 32 situé en dehors de l'écran tactile 15. Un tel bouton de validation 32 est représenté avec des pointillés sur la figure 1.

Toutefois, le moyen de validation 30 peut comprendre une zone de validation 31 tactile de l'écran tactile.

Par exemple, cette zone de validation 31 est délimitée par un cadre entourant le texte « VALID ».

Eventuellement, le dispositif de commande comporte un moyen d'annulation 40 manuel pour qu'un individu puisse annuler au moins un ordre.

Le moyen d'annulation 40 peut comprendre un bouton d'annulation 42 situé en dehors de l'écran tactile 15. Un tel bouton d'annulation 42 est représenté avec des pointillés sur la figure 1.

Toutefois, le moyen d'annulation 40 peut comprendre une zone d'annulation 41 tactile de l'écran tactile.

Par exemple, cette zone d'annulation 41 est délimitée par un cadre entourant le texte « UNDO ».

De plus, la zone d'annulation 41 et la zone de validation 31 peuvent être agencées dans un cadre 35, situé en bas à gauche de l'écran tactile selon l'exemple de la figure 1.

Ce dispositif de commande 10 permet de mettre en oeuvre le procédé selon l'invention. Ce procédé est explicité à l'aide des figures 1 à 5.

En référence à la figure 1, l'écran tactile est dans un état passif 25 par défaut. Dans cet état passif, aucun ordre de fonctionnement n'est en cours de traitement. L'état est alors dit « passif ». Néanmoins, l'écran tactile n'est pas verrouillé, toutes les zones de commande pouvant être sollicitées.

Selon le procédé, le contrôleur place l'écran tactile 15 dans l'état passif 25 en affichant le boîtier de commande virtuel selon un premier mode d'affichage.

Par contre, dans un état actif, l'écran tactile 15 affiche le boîtier de commande virtuel, sur ordre du contrôleur, selon un deuxième mode d'affichage distinct du premier mode d'affichage.

On appelle « premier mode d'affichage » et « deuxième mode d'affichage » l'aspect visuel donné à au moins une portion de l'écran. Ainsi, le premier mode d'affichage confère un premier aspect visuel à au moins une portion de l'écran tactile 15, et le deuxième mode d'affichage confère un deuxième aspect visuel à ladite portion distinct du premier aspect visuel.

Notamment, chaque mode d'affichage peut conférer une couleur ou une texture particulière au fond de l'écran tactile.

Par exemple, le premier mode d'affichage confère un premier aspect visuel au fond 18 de l'écran tactile 15, et le deuxième mode d'affichage confère un deuxième aspect visuel à ce fond 18 distinct du premier aspect visuel.

Selon la figure 1 notamment, l'état passif se caractérise alors par un fond gris représenté par des traits hachurés.

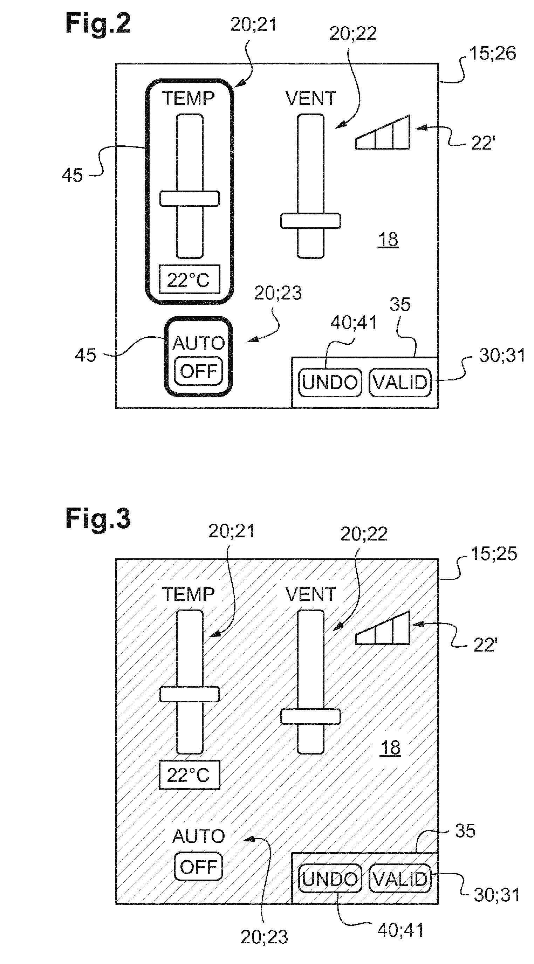

A l'inverse et en référence à la figure 2, l'état actif se caractérise par un fond de couleur blanche selon notre exemple.

En outre, la zone de validation 31 et/ ou la zone d'annulation 41 peuvent à chaque instant présenter le même aspect visuel que le fond.

La zone de validation 31 et la zone d'annulation 41 sont alors de couleur grise dans l'état passif, et de couleur blanche dans l'état actif.

Par contre et en référence à la figure 1, les zones de commande 20 présentent un troisième aspect visuel distinct du premier aspect visuel du fond.

Eventuellement, les zones de commande 20 présentent un troisième aspect visuel fixe correspondant au deuxième aspect visuel du fond. Ainsi, les zones de commande 20 sont toujours de couleur blanche selon notre exemple.

En référence à la figure 2, le contrôleur place l'écran tactile 15 dans l'état actif 26 en affichant le boîtier de commande virtuel selon le deuxième mode d'affichage lorsqu'au moins une zone de commande 20 a été touchée par un individu.

Par exemple, si un individu touche la zone de température 21, le contrôleur modifie la couleur du fond de l'écran tactile, de la zone de validation 31, et de la zone d'annulation 41.

L'état du système devient actif. Le contrôleur mémorise en effet dans son unité de stockage les ordres passés.

Selon l'exemple de la figure 2, un individu a sélectionné une température de 22° Celsius et a requis un fonctionnement automatique de l'équipement de climatisation 7, en pointant respectivement la zone de température 21 et la zone de mode de fonctionnement 23.

Le contrôleur mémorise alors deux ordres, à savoir un ordre de modification de la température de 19° Celsius vers 22° Celsius et un ordre de fonctionnement automatique de l'équipement de climatisation 7.

De plus, le contrôleur entoure selon une option chaque zone de commande 20 touchée par un individu avec une ligne continue 45 dans l'état actif 26.

Un individu peut alors déterminer visuellement que l'écran tactile a été touché en sélectionnant deux zones de commande selon l'exemple de la figure 2.

Cet individu peut de plus contrôler visuellement la validité des commandes prévues.

Si les commandes sont conformes aux souhaits de l'individu, cet individu peut valider manuellement les ordres mémorisés en sollicitant le moyen de validation.

Par exemple, un individu appuie sur la zone de validation 31 pour valider manuellement tous les ordres passés. Le contrôleur transmet alors au moins un signal à au moins un équipement pour retranscrire ces ordres. Selon l'exemple donné, le contrôleur indique à l'équipement de climatisation la température à atteindre et le mode de fonctionnement à mettre en oeuvre en lui transmettant à cet effet au moins un signal.

Les ordres étant passés, le contrôleur supprime tous les cadres et lignes continues 45 affichés précédemment. De plus, le contrôleur ordonne le passage à l'état passif en affichant le boîtier de commande virtuel selon le premier mode d'affichage conformément à la figure 3.

A partir de l'état actif de la figure 2, si les commandes passées ne sont pas conformes aux souhaits d'un individu, cet individu peut aussi annuler un ou plusieurs ordres en manoeuvrant le moyen d'annulation.

Par exemple, l'individu peut annuler le dernier ordre donné en sollicitant le moyen d'annulation durant un temps court.

Ainsi, l'individu peut appuyer sur la zone d'annulation durant un temps court, de l'ordre de la seconde par exemple, pour annuler le dernier ordre mémorisé. Le contrôleur supprime l'ordre concerné de son unité de stockage.

De plus, le cadre entourant la zone de commande correspondante est alors supprimé. Toutefois, l'écran tactile affiche toujours le boîtier de commande virtuel selon le deuxième mode d'affichage.

Un individu peut alors par exemple valider les ordres restants selon la procédure décrite précédemment.

Par ailleurs, un individu peut annuler tous les ordres donnés en sollicitant le moyen d'annulation durant un temps long.

Ainsi, l'individu peut aussi appuyer sur la zone d'annulation durant un temps long, de l'ordre de trois secondes par exemple, pour annuler tous les ordres mémorisés depuis le passage à l'état actif. Le contrôleur supprime alors tous les ordres concernés de son unité de stockage.

De plus, les cadres 45 entourant les zones de commande sollicitées sont tous supprimés. Enfin, le contrôleur ordonne le passage à l'état passif en affichant le boîtier de commande virtuel selon le premier mode d'affichage.

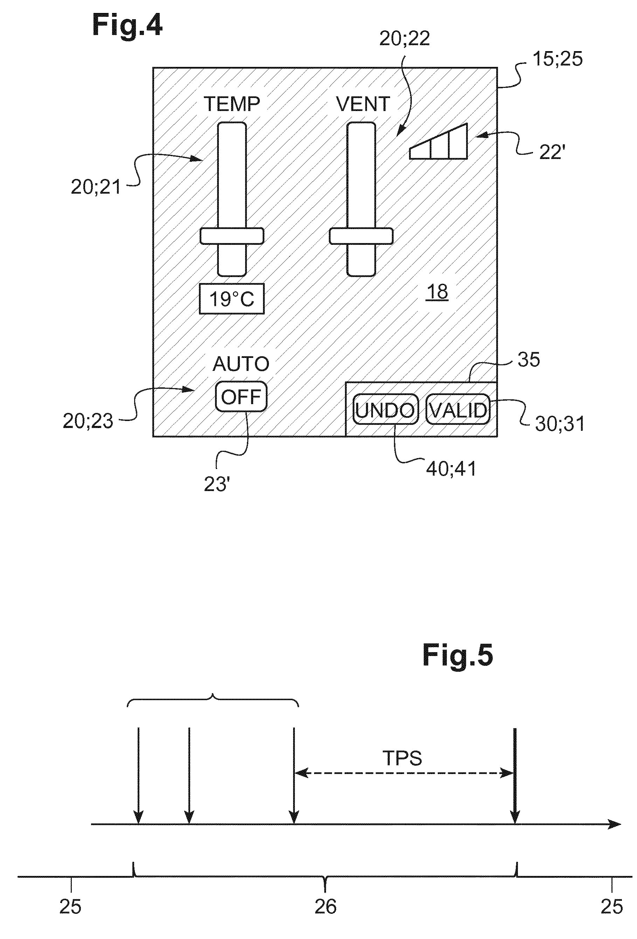

Dès lors, le boîtier de commande virtuel retourne à son état initial schématisé sur la figure 4.

Enfin, le contrôleur peut aussi annuler les ordres donnés et replacer le boîtier de commande virtuel dans l'état passif de sa propre autorité.

Dans l'état actif 26 de la figure 2, si aucune action n'est entreprise à l'issue d'une période prédéterminée, le contrôleur annule automatiquement chaque commande passée depuis le passage de l'état passif à l'état actif. La procédure décrite dans le cadre d'un moyen d'annulation sollicité sur un temps long est alors appliquée.

En référence à la figure 5, le contrôleur peut utiliser un compteur de temps.

Au départ, le boitier de commande virtuel est dans l'état passif 25.

A la première commande, le boitier de commande virtuel passe dans l'état actif 26. Chaque appui sur une zone de commande de l'écran tactile induit alors une réinitialisation du compteur.

Si ce compteur atteint néanmoins la période TPS prédéterminée, le système est remis dans son état passif.

En effet, l'ensemble des commandes passées dans le mode actif courant est automatiquement annulé et le boitier de commande virtuel retourne dans l'état passif.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Procédé mis en oeuvre par un système (5) comprenant un dispositif de commande (10) en liaison avec au moins un équipement (6) à contrôler, ledit dispositif de commande (10) comprenant un écran tactile (15), ledit écran tactile (15) pouvant afficher au moins un boîtier de commande virtuel (17) comprenant au moins une zone de commande (20) tactile qui génère une commande transmise audit équipement lorsqu'un individu touche cette zone de commande,
- ledit écran tactile (15) étant en permanence déverrouillé pour qu'un opérateur puisse générer ladite commande en touchant ladite zone de commande (20),
ledit écran tactile (15) étant placé dans un état passif (25) conférant audit écran tactile (15) un premier mode d'affichage lorsqu'aucune zone de commande (20) n'a été touchée par un individu,
ledit écran tactile (15) étant placé dans un état actif (26) conférant audit écran tactile (15) un deuxième mode d'affichage distinct dudit premier mode d'affichage lorsqu'au moins une zone de commande (20) a été touchée par un individu,
**caractérisé en ce que**
- on équipe le dispositif de commande (10) d'un moyen de validation (30) et on valide conjointement chaque commande requise suite au passage de l'écran tactile de l'état passif (25) à l'état actif (26) lorsque ledit moyen de validation (30) est manipulé, ledit dispositif de commande (10) transmettant au moins un signal à au moins un équipement (6) pour retranscrire chaque commande,
- on place l'écran tactile (15) dans ledit état passif (25) suite à la manipulation dudit moyen de validation (30).

2. Procédé selon la revendication 1,
**caractérisé en ce que** ledit premier mode d'affichage confère un premier aspect visuel à au moins une portion de l'écran tactile (15) et ledit deuxième mode d'affichage confère un deuxième aspect visuel à ladite portion distinct du premier aspect visuel.

3. Procédé selon la revendication 2,
**caractérisé en ce que** ledit premier mode d'affichage confère un premier aspect visuel à un fond (18) de l'écran tactile (15) et ledit deuxième mode d'affichage confère un deuxième aspect visuel audit fond (18) distinct du premier aspect visuel.

4. Procédé selon l'une quelconque des revendications 1 à 3,
**caractérisé en ce qu'**on matérialise le moyen de validation (30) par une zone de validation (31) dudit écran tactile (15).

5. Procédé selon l'une quelconque des revendications 1 à 4,
**caractérisé en ce que** ledit premier mode d'affichage conférant un premier aspect visuel à un fond (18) de l'écran tactile (15) et ledit deuxième mode d'affichage conférant un deuxième aspect visuel audit fond (18) distinct du premier aspect visuel, ladite zone de validation (31) présente le même aspect visuel que ledit fond (18).

6. Procédé selon l'une quelconque des revendications 1 à 5,
**caractérisé en ce que** ledit premier mode d'affichage conférant un premier aspect visuel à un fond (18) de l'écran tactile (15) et ledit deuxième mode d'affichage conférant un deuxième aspect visuel audit fond (18) distinct du premier aspect visuel, chaque zone de commande présente un troisième aspect visuel distinct du premier aspect visuel dudit fond (18).

7. Procédé selon l'une quelconque des revendications 1 à 6,
**caractérisé en ce qu'**on équipe le dispositif de commande (10) d'un moyen d'annulation (40) et on annule chaque commande requise suite au passage de l'écran tactile (15) de l'état passif (25) à l'état actif (26) lorsque ledit moyen d'annulation (40) est sollicité durant une durée supérieure à un temps seuil dit « temps long », ledit l'écran tactile (15) retournant alors dans ledit état passif (25).

8. Procédé selon l'une quelconque des revendications 1 à 7,
**caractérisé en ce qu'**on équipe le dispositif de commande (10) d'un moyen d'annulation (40) et on annule la dernière commande requise suite au passage de l'écran tactile (15) de l'état passif (25) à l'état actif (26) lorsque ledit moyen d'annulation (40) est sollicité durant une durée inférieure à un temps seuil dit « temps court », et on maintient l'écran tactile (15) dans l'état actif (26).

9. Procédé selon l'une quelconque des revendications 7 à 8,
**caractérisé en ce qu'**on matérialise le moyen d'annulation (40) par une zone d'annulation (41) dudit écran tactile (15).

10. Procédé selon la revendication 9,
**caractérisé en ce que** ledit premier mode d'affichage conférant un premier aspect visuel à un fond (18) de l'écran tactile (15), et ledit deuxième mode d'affichage conférant un deuxième aspect visuel audit fond (18) distinct du premier aspect visuel, ladite zone d'annulation (41) présente le même aspect visuel que ledit fond (18).

11. Procédé selon l'une quelconque des revendications 9 à 10,
**caractérisé en ce que** ladite zone d'annulation (41) est présente dans un cadre (35) accueillant en outre une zone de validation (31).

12. Procédé selon l'une quelconque des revendications 1 à 11,
**caractérisé en ce qu'**on entoure chaque zone de commande (20) touchée par un individu avec une ligne continue (45) dans l'état actif (26) et on supprime chaque ligne continue (45) lors du passage de l'écran tactile (15) de l'état actif (26) à l'état passif (25).

13. Procédé selon la revendication 12,
**caractérisé en ce qu'**on supprime la ligne continue (45) entourant la dernière zone de commande (20) touchée par un individu en manoeuvrant un moyen d'annulation (40).

14. Procédé selon l'une quelconque des revendications 1 à 13,
**caractérisé en ce que**, dans l'état actif (26), si aucune action n'est entreprise à l'issue d'une période (TPS) prédéterminée, on annule automatiquement chaque commande passée depuis le passage de l'état passif (25) à l'état actif (26) et on passe ledit écran tactile (15) dans l'état passif (25).

15. Procédé selon la revendication 14,
**caractérisé en ce que** ladite période (TPS) varie en fonction de la mission, ladite mission étant choisie parmi une liste de mission par un individu.

16. Procédé selon l'une quelconque des revendications 1 à 15,
**caractérisé en ce que** ledit système (5) comportant un équipement de climatisation (7), ledit écran tactile (15) comporte une pluralité de zones de commande (20) incluant :
- une zone de commande (20) dite « zone de température (21) » pour régler une température à obtenir en mettant en oeuvre ledit équipement de climatisation (7),
- une zone de commande (20) dite « zone de ventilation (22) » pour régler une ventilation produite par ledit équipement de climatisation (7),
- une zone de commande (20) dite « zone de mode de fonctionnement (23) » pour requérir soit un fonctionnement manuel ou soit fonctionnement automatique dudit équipement de climatisation (7).

17. Dispositif de commande (10) d'un équipement (6), ledit dispositif de commande (10) comprenant un écran tactile (15), ledit écran tactile (15) comprenant au moins une zone de commande (20) tactile qui génère une commande transmise audit équipement (6) lorsqu'un individu touche cette zone de commande,
**caractérisé en ce que**
- ledit dispositif de commande (10) est dépourvu d'un moyen de verrouillage de l'écran tactile (15) empêchant la manoeuvre d'au moins une zone de commande (20),
- ledit dispositif de commande (10) comporte un moyen de validation (30) et une unité de traitement (11) exécutant des instructions mémorisées dans une unité de stockage (12) pour mettre en oeuvre le procédé selon l'une quelconque des revendications 1 à 16.

## Patentansprüche

1. Verfahren, ausgeführt durch ein System (5) mit einer Steuervorrichtung (10), die mit mindestens einer zu steuernden Ausrüstung (6) in Verbindung steht, wobei die Steuervorrichtung (10) einen Touchscreen (15) aufweist, wobei der Touchscreen (15) mindestens ein virtuelles Bedientableau (17) anzeigen kann, welches mindestens einen berührungsempfindlichen Steuerbereich (20) aufweist, der einen Befehl erzeugt, der zu der Ausrüstung geschickt wird, wenn eine Person diesen Steuerbereich berührt, wobei
- der Touchscreen (15) permanent entriegelt ist, damit eine Bedienungsperson den Befehl erzeugen kann, indem sie den Steuerungsbereich (20) berührt,
- der Touchscreen (15) in einen passiven Zustand (25) versetzt ist, der den Touchscreen (15) in einen ersten Anzeigemodus versetzt, wenn kein Steuerungsbereich (20) von einer Person berührt wurde,
- der Touchscreen (15) in einen aktiven Zustand (26) versetzt ist, der den Touchscreen (15) in einen zweiten Anzeigemodus versetzt, der von dem ersten Anzeigemodus verschieden ist, wenn mindestens ein Steuerungsbereich (20) von einer Person berührt wurde,
**dadurch gekennzeichnet, dass**
- die Steuervornchtung (10) mit einem Validierungsmittel (30) ausgerüstet wird, und jeder angeforderte Befehl nach dem Übergang des Touchscreens von dem passiven Zustand (25) in den aktiven Zustand (26) gemeinschaftlich validiert wird, wenn das Validierungsmittel (30) betätigt wurde, wobei die Steuerungsvorrichtung (10) mindestens ein Signal an mindestens eine Ausrüstung (6) sendet, um jeden Befehl abzubilden,
- der Touchscreen (15) in den passiven Zustand (25) nach einer Betätigung des Validierungsmittels (30) versetzt wird.

2. Verfahren nach Anspruch 1,
**dadurch gekennzeichnet, dass** der erste Anzeigemodus mindestens einem Teil des Touchscreens (15) ein erstes visuelles Erscheinungsbild verleiht, und der zweite Anzeigemodus dem Teil ein zweites visuelles Erscheinungsbild verleiht, das von dem ersten visuellen Erscheinungsbild verschieden ist.

3. Verfahren nach Anspruch 2,
**dadurch gekennzeichnet, dass** der erste Anzeigemodus einem Hintergrund (18) des Touchscreens (15) ein erstes visuelles Erscheinungsbild verleiht, und der zweite Anzeigemodus dem Hintergrund ein zweites visuelles Erscheinungsbild verleiht, das von dem ersten visuellen Erscheinungsbild verschieden ist.

4. Verfahren nach einem der Ansprüche 1 bis 3,
**dadurch gekennzeichnet, dass** das Validierungsmittel (30) durch einen Validierungsbereich (31) des Touchscreens (15) realisiert wird.

5. Verfahren nach einem der Ansprüche 1 bis 4,
**dadurch gekennzeichnet, dass** der erste Anzeigemodus einen Hintergrund (18) des Touchscreens (15) ein erstes visuelles Erscheinungsbild verleiht, und der zweite Anzeigemodus dem Hintergrund (18) ein zweites visuelles Erscheinungsbild verleiht, das von dem ersten visuellen Erscheinungsbild verschieden ist, wobei der Validierungsbereich (31) das gleiche visuelle Erscheinungsbild hat, wie der Hintergrund (18).

6. Verfahren nach einem der Ansprüche 1 bis 5,
**dadurch gekennzeichnet, dass** der erste Anzeigemodus einem Hintergrund (18) des Touchscreens (15) ein erstes visuelles Erscheinungsbild verleiht, und der zweite Anzeigemodus dem Hintergrund (18) ein zweites visuelles Erscheinungsbild verleiht, das von dem ersten visuellen Erscheinungsbild verschieden ist, wobei jeder Befehlsbereich ein drittes visuelles Erscheinungsbild aufweist, das vom ersten visuellen Erscheinungsbild des Hintergrunds (18) verschieden ist.

7. Verfahren nach einem der Ansprüche 1 bis 6,
**dadurch gekennzeichnet, dass** die Steuerungsvorrichtung (10) mit einem Annullierungsmittel (40) ausgerüstet wird und jeder angeforderte Befehl nach dem Übergang des Touchscreens (15) vom passiven Zustand (25) in den aktiven Zustand (26) annulliert wird, wenn das Annullierungsmittel (40) während einer Zeitdauer betätigt wird, die größer ist als ein Zeitdauerschwellenwert, genannt "lange Zeitdauer", wodurch der Touchscreen (15) somit in den passiven Zustand (25) zurückkehrt.

8. Verfahren nach einem der Ansprüche 1 bis 7,
**dadurch gekennzeichnet, dass** die Steuerungsvorrichtung (10) mit einem Annullierungsmittel (40) ausgerüstet wird, und der letzte erforderliche Befehl annulliert wird, nachdem der Touchscreen (15) von dem passiven Zustand (25) in den aktiven Zustand (26) übergegangen ist, wenn das Annullierungsmittel (40) während einer Zeitdauer betätigt wurde, die kleiner ist als ein Zeitdauerschwellenwert, genannt "kurze Zeitdauer", und der Touchscreen (15) in dem aktiven Zustand (26) gehalten wird.

9. Verfahren nach einem der Ansprüche 7 bis 8,
**dadurch gekennzeichnet, dass** das Annullierungsmittel (40) durch einen Annullierungsbereich (41) des Touchscreens (15) realisiert wird.

10. Verfahren nach Anspruch 9,
**dadurch gekennzeichnet, dass** der erste Anzeigemodus einem Hintergrund (18) des Touchscreens (15) ein erstes visuelles Erscheinungsbild verleiht, und der zweite Anzeigemodus dem Hintergrund (18) ein zweites visuelles Erscheinungsbild verleiht, das von dem ersten visuellen Erscheinungsbild verschieden ist, wobei der Annullierungsbereich (41) das gleiche visuelle Erscheinungsbild aufweist wie der Hintergrund (18).

11. Verfahren nach einem der Ansprüche 9 bis 10,
**dadurch gekennzeichnet, dass** der Annullierungsbereich (41) in einem Rahmen (35) dargestellt wird, der außerdem einen Validierungsbereich (31) aufnimmt.

12. Verfahren nach einem der Ansprüche 1 bis 11,
**dadurch gekennzeichnet, dass** jeder von einer Person berührte Steuerungsbereich (20) im aktiven Zustand (26) mit einer durchgezogenen Linie (45) umgeben wird, und jede durchgezogene Linie (45) während des Übergangs des Touchscreens (15) vom aktiven Zustand (26) in den passiven Zustand (25) entfernt wird.

13. Verfahren nach Anspruch 12,
**dadurch gekennzeichnet, dass** die durchgezogene Linie (45), die den letzten Steuerungsbereich (20) umgibt, der von einer Person berührt wurde, entfernt wird, indem ein Annullierungsmittel (40) betätigt wird.

14. Verfahren nach einem der Ansprüche 1 bis 13,
**dadurch gekennzeichnet, dass** im aktiven Zustand (26), wenn keinerlei Aktion nach Ablauf einer vorbestimmen Zeitdauer (TPS) ausgeführt wird, jeder Befehl automatisch annulliert wird, der seit dem Übergang des passiven Zustands (25) in den aktiven Zustand (26) erfolgt ist, und der Touchscreen (15) in den passiven Zustand (25) überführt wird.

15. Verfahren nach Anspruch 14,
**dadurch gekennzeichnet, dass** die Zeitdauer (TPS) sich in Abhängigkeit von der Aufgabe ändert, wobei die Aufgabe durch eine Person aus einer Aufgabenliste gewählt wird.

16. Verfahren nach einem der Ansprüche 1 bis 15,
**dadurch gekennzeichnet, dass** das System (5) eine Klimaanlage (7) aufweist, wobei der Touchscreen (15) eine Mehrzahl von Steuerungsbereichen (20) aufweist, die umfassen:
- einen Steuerungsbereich (20), genannt "Temperaturbereich (21)", zum Regeln einer zu erhaltenen Temperatur durch Betreiben der Klimaanlage (7),
- einen Steuerungsbereich (20), genannt "Ventilationsbereich (22)", um eine Ventilation zu regeln, die von der Klimaanlage (7) erzeugt wird,
- einen Steuerungsbereich (20), genannt "Betriebsartmodus (23)", um entweder einen manuellen Betrieb oder einen automatischen Betrieb der Klimaanlage (7) anzufordern.

17. Steuerungsvorrichtung (10) einer Ausrüstung (6), wobei die Steuerungsvorrichtung (10) einen Touchscreen (15) aufweist, wobei der Touchscreen (15) mindestens einen berührungsempfindlichen Steuerungsbereich (20) aufweist, der einen Befehl erzeugt, der zu der Ausrüstung (6) gesendet wird, wenn eine Person diesen Steuerungsbereich berührt,
**dadurch gekennzeichnet, dass**
- die Steuerungsvorrichtung (10) kein Verriegelungsmittel des Touchscreens (15) aufweist, welches die Betätigung mindestens eines Steuerungsbereichs (20) verhindert,
- die Steuerungsvorrichtung (10) ein Validierungsmittel (30) und eine Vera,rbeitungseinheit (11) aufweist, die in einer Speichereinheit (12) gespeicherte Befehle ausführt, um das Verfahren nach einem der Ansprüche 1 bis 16 durchzuführen.

## Claims

1. A method implemented by a system (5) comprising a control device (10) linked to at least one item of equipment (6) which is to be controlled, said control device (10) comprising a touch screen (15), said touch screen (15) being capable of displaying at least one virtual control unit (17) comprising at least one touch-sensitive control zone (20) which generates a command which is transmitted to said item of equipment when an individual touches this control zone,
- said touch screen (15) being permanently unlocked so that an operator can generate said command by touching said control zone (20),
said touch screen (15) being placed in a passive state (25) which imparts to said touch screen (15) a first display mode when no control zone (20) has been touched by an individual,
said touch screen (15) being placed in an active state (26) which imparts to said touch screen (15) a second display mode distinct from said first display mode when at least one control zone (20) has been touched by an individual,
**characterised in that**
- the control device (10) is equipped with a validation means (30) and each command requested is validated jointly once the touch screen has passed from the passive state (25) into the active state (26) when said validation means (30) is operated, said control device (10) transmitting at least one signal to at least one item of equipment (6) for retranscribing each command,
- the touch screen (15) is placed into said passive state (25) following the operation of said validation means (30).

2. A method according to Claim 1,
**characterised in that** said first display mode imparts a first visual appearance to at least a portion of the touch screen (15) and said second display mode imparts to said portion a second visual appearance which is distinct from the first visual appearance.

3. A method according to Claim 2,
**characterised in that** said first display mode imparts a first visual appearance to a background (18) of the touch screen (15) and said second display mode imparts to said background (18) a second visual appearance which is distinct from the first visual appearance.

4. A method according to any one of Claims 1 to 3,
**characterised in that** the validation means (30) is embodied by a validation zone (31) of said touch screen (15).

5. A method according to any one of Claims 1 to 4,
**characterised in that** said first display mode imparting a first visual appearance to a background (18) of the touch screen (15) and said second display mode imparting to said background (18) a second visual appearance which is distinct from the first visual appearance, said validation zone (31) has the same visual appearance as said background (18).

6. A method according to any one of Claims 1 to 5,
**characterised in that** said first display mode imparting a first visual appearance to a background (18) of the touch screen (15) and said second display mode imparting to said background (18) a second visual appearance which is distinct from the first visual appearance, each control zone has a third visual appearance distinct from the first visual appearance of said background (18).

7. A method according to any one of Claims 1 to 6,
**characterised in that** the control device (10) is equipped with a cancellation means (40) and each command requested is cancelled once the touch screen (15) has passed from the passive state (25) into the active state (26) when said cancellation means (40) is operated for a duration greater than a threshold time referred to as "long time", said touch screen (15) then returning to said passive state (25).

8. A method according to any one of Claims 1 to 7,
**characterised in that** the control device (10) is equipped with a cancellation means (40) and the last command requested is cancelled once the touch screen (15) has passed from the passive state (25) into the active state (26) when said cancellation means (40) is operated for a duration less than a threshold time referred to as "short time", and said touch screen (15) is kept in the active state (26).

9. A method according to any one of Claims 7 to 8,
**characterised in that** the cancellation means (40) is embodied by a cancellation zone (41) of said touch screen (15).

10. A method according to Claim 9,
**characterised in that** said first display mode imparting a first visual appearance to a background (18) of the touch screen (15), and said second display mode imparting to said background (18) a second visual appearance which is distinct from the first visual appearance, said cancellation zone (41) has the same visual appearance as said background (18).

11. A method according to any one of Claims 9 to 10,
**characterised in that** said cancellation zone (41) is present in a box (35) which furthermore receives a validation zone (31).

12. A method according to any one of Claims 1 to 11,
**characterised in that** each control zone (20) touched by an individual is surrounded with a continuous line (45) in the active state (26), and each continuous line (45) is deleted upon the touch screen (15) passing from the active state (26) into the passive state (25).

13. A method according to Claim 12,
**characterised in that** the continuous line (45) surrounding the last control zone (20) touched by an individual is deleted by operating a cancellation means (40).

14. A method according to any one of Claims 1 to 13,
**characterised in that**, in the active state (26), if no action is undertaken at the end of a predetermined period (TPS), each command sent since passing from the passive state (25) into the active state (26) is automatically cancelled and said touch screen (15) is passed into the passive state (25).

15. A method according to Claim 14,
**characterised in that** said period (TPS) varies according to the mission, said mission being selected from among a mission list by an individual.

16. A method according to any one of Claims 1 to 15,
**characterised in that** said system (5) comprising air-conditioning equipment (7), said touch screen (15) comprises a plurality of control zones (20) including:
- a control zone (20) referred to as "temperature zone (21)" for regulating a temperature to be obtained by using said air-conditioning equipment (7),
- a control zone (20) referred to as "ventilation zone (22)" for regulating ventilation produced by said air-conditioning equipment (7),
- a control zone (20) referred to as "operating mode zone (23)" for requesting either manual operation or automatic operation of said air-conditioning equipment (7).

17. A control device (10) for controlling an item of equipment (6), said control device (10) comprising a touch screen (15), said touch screen (15) comprising at least one touch-sensitive control zone (20) which generates a command transmitted to said item of equipment (6) when an individual touches this control zone,
**characterised in that**
- said control device (10) is devoid of a locking means for the touch screen (15) which prevents the operation of at least one control zone (20),
- said control device (10) comprises a validation means (30) and a processing unit (11) which executes instructions stored in a storage unit (12) for implementing the method according to any one of Claims 1 to 16.
